# EUROPEAN PATENT SPECIFICATION

(11) **EP 2 631 285 B1**
(45) Date of publication and mention of the grant of the patent: **07.03.2018**
(21) Application number: 10858604.1
(22) Date of filing: 18.10.2010
(51) Int. Cl.: C11B 9/00, A24D 3/14

(54) **METHOD OF PRODUCING FLAVOR-RELEASING GRANULES, FLAVOR-RELEASING GRANULES, AND CIGARETTE FILTER CONTAINING FLAVOR-RELEASING GRANULES**
VERFAHREN ZUR HERSTELLUNG VON GESCHMACKSFREISETZENDEM GRANULAT, GESCHMACKSFREISETZENDES GRANULAT UND ZIGARETTENFILTER MIT GESCHMACKSFREISETZENDEM GRANULAT
PROCÉDÉ POUR LA FABRICATION DE GRANULES DE LIBÉRATION D'ARÔME, GRANULES DE LIBÉRATION D'ARÔME, ET FILTRE DE CIGARETTE CONTENANT DES GRANULES DE LIBÉRATION D'ARÔME

(43) Date of publication of application: 28.08.2013
(73) Proprietor: JAPAN TOBACCO INC., Minato-ku Tokyo 105-8422 (JP)
(72) Inventor: KOBAYASHI, Tomohiro, Tokyo 130-8603 (JP); MIYAUCHI, Masato, Tokyo, 130-8603 (JP)
(74) Representative: Isarpatent
(86) International application number: PCT/JP2010/068290
(87) International publication number: WO 2012/053048

(56) References cited:
- EP-A2- 0 392 608
- WO-A1-2010/079793
- JP-A- 1 060 363
- JP-A- 10 279 986
- US-A- 6 056 949
- US-A1- 2009 214 446
- US-A1- 2009 235 941
- T.A. REINECCIUS ET AL: "Encapsulation of Flavors using Cyclodextrins: Comparison of Flavor Retention in Alpha, Beta, and Gamma Types", JOURNAL OF FOOD SCIENCE, vol. 67, no. 9, 1 November 2002 (2002-11-01), pages 3271-3279, XP055103088, ISSN: 0022-1147, DOI: 10.1111/j.1365-2621.2002.tb09577.x
- REINECCIUS T.A. ET AL.: 'Flavor Release from Cyclodextrin Complexes: Comparison of Alpha, Beta, and Gamma Types' J.FOOD SCI. vol. 68, no. 4, 2003, pages 1234 - 1239, XP055082447

## Description

### Technical Field

The present invention relates to a method of producing flavor-releasing granules, flavor-releasing granules, and a cigarette filter containing flavor-releasing granules.

### Background Art

In order to add flavors other than the flavor derived from tobacco shreds to tobacco mainstream smoke and enjoy various flavors, it has been a practice to add a flavoring agent to a filter provided at one end of a cigarette rod. For example, Patent Literature 1 discloses adding a flavoring agent comprising finely divided powder of branched α-cyclodextrin including a lipophilic flavorant to a filter material such as cellulose acetate fibers. In this flavoring agent, the cyclodextrin reliably retains the lipophilic flavorant during storage of the flavoring agent and stably releases the flavor derived from the lipophilic flavorant during smoking. Because cyclodextrin causes an undesirable aroma and taste upon burning, the flavoring agent noted above is added to the filter. Patent Literature 2 points out problems (for example, difficulty of uniform addition in a filter material and dropping from the filter) when finely divided powder of flavoring agent is added to a filter. To solve such problems, Patent Literature 2 discloses flavorant granules comprising flavorant inclusion cyclodextrin powder attached to the surface of a core material by a binder. More specifically, the flavorant granules are obtained by adding the flavorant inclusion cyclodextrin powder previously prepared to particles of the core material placed in a centrifugal tumbling coating granulator together with an aqueous solution of a binder to perform a coating treatment and then drying (see Examples). The particle size of the flavorant granules is approximately the same as that of charcoal used in a charcoal filter and thus, no special facility is needed for addition thereof to the filter (flavorant granules can be added to the filter in the same way as when charcoal is added to the filter).

Nowadays, however, requests of smokers range widely and one of such requests is to desire to enjoy a more complex flavor. To meet the request by the technology using previously prepared inclusion cyclodextrin powder as in Patent Literature 1 and Patent Literature 2, it is necessary to prepare a plurality of cyclodextrin powders individually including different flavorants. That is, as cyclodextrin (hereinafter sometimes abbreviated as "CD"), α-CD, β-CD and γ-CD are generally known, and inside diameters of their internal hydrophobic cavities are different from each other and also types of flavorant compounds fitting to the inside diameters are different. Usually, cyclodextrin powder including a single flavorant is prepared. Thus, to enjoy flavors of a plurality of flavorants, it is preferable to prepare a plurality of cyclodextrin powders including mutually different single flavorants. (One type of CD cannot include a plurality of types of flavorant compounds.) In addition, the binder used to attach the flavorant inclusion cyclodextrin powder to the core material in Patent Literature 2 may suppress the release of flavor from cyclodextrin.

### Citation List

### Patent Literature

Patent Literature 1: Jpn. Pat. Appln. KOKAI Publication No. 10-279986
Patent Literature 2: WO 2010-79793

US 2009/214446 A1 and EP 0 392 608 A2 both teach methods of producing flavor-releasing compositions that utilise mixtures of cyclodextrins.

### Summary of Invention

### Technical Problem

Therefore, a first object of the present invention is to provide a method that can more easily produce flavor-releasing granules capable of releasing a more complex flavor, without using a binder.

A second object of the present invention is to provide flavor-releasing granules capable of releasing a more complex flavor.

A third object of the present invention is to provide a filter for a smoking article, which contains flavor-releasing granules capable of releasing a more complex flavor.

### Solution to Problem

According to an aspect of the present invention, a method of producing flavor-releasing granules is provided, which comprises (a) adding ethanol, together with a mixture of a plurality of flavorant compounds, to an aqueous solution containing two or three cyclodextrin compounds selected from the group consisting of an α-cyclodextrin compound, a β-cyclodextrin compound and a γ-cyclodextrin compound, at a total concentration of 1 to 10 % by weight, such that the mixture of plurality of flavorant compounds are present at a concentration of 3 to 10 % by weight in the aqueous solution and the ethanol is present at a concentration of 1 to 5 % by weight in the aqueous solution; and conducting stirring to include the flavorant compounds within the selected cyclodextrin compounds, thereby providing an aqueous coating solution containing the cyclodextrin mixture including the flavorant compounds, (b) maintaining hygroscopic core particles in a state of planetary motion, by placing hygroscopic core particles on a rotating disk of a centrifugal tumbling coating granulator comprising the rotating disk rotating horizontally, a cylindrical fixed wall provided spaced apart from the rotating disk and surrounding the rotating disk, and a lower wall closing a lower opening of the fixed wall; and driving the rotating disk to rotate and the same time feeding an air into a space provided between the rotating disk and the lower wall; and (c) intermittently spraying the aqueous coating solution onto the hygroscopic core particles in the state of planetary motion and conducting drying to form a flavor-releasing coat layer containing the cyclodextrin mixture including the flavorant compounds directly carried on respective surfaces of the hygroscopic core particles without a binder.

According to another aspect of the present invention, flavor-releasing granules obtained by the above method are provided, which comprise hygroscopic core particles and flavor-releasing coat layers provided on respective surfaces of the hygroscopic core particles, wherein the flavor-releasing coat layers are directly carried on the respective surfaces of the hygroscopic particles without addition of a binder and contain two or three cyclodextrin compounds selected from the group consisting of an α-cyclodextrin compound, a β-cyclodextrin compound and a γ-cyclodextrin compound and including mutually different flavorant compounds.

According to still another aspect of the present invention, a filter is provided which contains flavor-releasing granules according to the present invention.

### Advantageous Effects of Invention

A method of producing flavor-releasing granules according to the present invention can more easily produce flavor-releasing granules capable of releasing a more complex flavor, without using a binder. Because the flavor-releasing granules of the present invention contain no binder, the release of flavor from the granules will not be suppressed by a binder.

### Brief Description of Drawings

FIG. 1 is a schematic diagram illustrating an example of centrifugal tumbling coating granulator.
FIG. 2 is an enlarged schematic sectional view illustrating a multi-segment filter according to a first embodiment in a state connected to a cigarette rod.
FIG. 3 is an enlarged schematic sectional view illustrating a multi-segment filter according to a second embodiment in a state to a cigarette rod.
FIG. 4 is an enlarged schematic sectional view illustrating a multi-segment filter according to a third embodiment in a state connected to a cigarette rod.
FIG. 5 is an enlarged schematic sectional view illustrating a multi-segment filter according to a fourth embodiment in a state connected to a cigarette rod.
FIG. 6A is an enlarged schematic sectional view illustrating a multi-segment filter according to a fifth embodiment in a state connected to a cigarette rod.
FIG. 6B is a sectional view along line VIB-VIB of FIG. 6A.
FIG. 7 is an enlarged schematic sectional view illustrating a multi-segment filter according to a sixth embodiment in a state connected to a cigarette rod.
FIG. 8 is an enlarged schematic sectional view illustrating a multi-segment filter according to a seventh embodiment in a state connected to a cigarette rod.
FIG. 9 is an enlarged schematic sectional view illustrating a multi-segment filter according to an eighth embodiment in a state connected to a cigarette rod.

### Mode for Carrying Out the Invention

First, a method of producing flavor-releasing granules according to one embodiment of the present invention will be described.

The method comprises providing an aqueous solution containing two or three cyclodextrin compounds selected from the group consisting of an α-cyclodextrin compound, β-cyclodextrin compound and γ-cyclodextrin compound.

The α-cyclodextrin compound includes α-CD and derivatives thereof. α-CD is a cyclic oligosaccharide in which six glucose molecules are linked by α-1,4-glycoside linkages, and the inside diameter of its cavity is 0.5 to 0.6 nm. Derivatives of α-CD include a methylated form, hydroxypropylated form, and a branched form (for example, α-CD to which glucose or maltose is bound as side chain).

The β-cyclodextrin compound includes β-CD and derivatives thereof. β-CD is a cyclic oligosaccharide in which seven glucose molecules are linked by α-1,4-glycoside linkages, and the inside diameter of its cavity is 0.7 to 0.8 nm. Derivatives of β-CD include a methylated form, hydroxypropylated form, and a branched form (for example, β-CD to which glucose or maltose is bound as side chains).

The γ-cyclodextrin compound includes γ-CD and derivatives thereof. γ-CD is a cyclic oligosaccharide in which eight glucose molecules are linked by α-1,4-glycoside linkages, and the inside diameter of its cavity is 0.9 to 1.0 nm. Derivatives of γ-CD include a methylated form, hydroxypropylated form, and a branched form (for example, γ-CD to which glucose or maltose is bound as side chains).

In the present invention, two or three cyclodextrin compounds selected from these α-cyclodextrin compound, β-cyclodextrin compound and γ-cyclodextrin compound are dissolved in water to obtain an aqueous solution of the cyclodextrin compounds. The total concentration of the cyclodextrin compounds in the aqueous solution is 1 to 10% by weight. The ratio of the two or three cyclodextrin compounds in the aqueous solution is not particularly limited, and the α-cyclodextrin compound, β-cyclodextrin compound, and γ-cyclodextrin compound can be used at the weight ratio of 1-10 : 1-10 : 1-10.

Next, ethanol is added to the aqueous solution of the cyclodextrin compounds together with a mixture of a plurality of flavorant compounds, and the solution is stirred. α-CD, β-CD and γ-CD have, as described above, different inside diameters of cavities, and thus flavorant compounds just fitting to (optimally included in) respective cavities differ. In the present invention, a straight-chain ester compound such as ethyl acetate, ethyl butyrate, isoamyl acetate or isoamyl butyrate, a compound having a terpene skeleton such as menthol, linalool, limonene or geraniol, a compound having an aromatic ring such as vanillin, anethole or cinnamaldehyde, or a compound having a cyclic and relatively large molecular skeleton such as pentadecalactone or caryophyllene can be used as the flavorant compound. Which flavorant compound is optimally included in which cyclodextrin depends on the relationship between the molecular size of the flavorant compound and the size of the cavity of cyclodextrin.

In the present invention, a plurality of flavorant compounds added to the aqueous solution of the cyclodextrin compounds comprises a mixture of two or more compounds selected from the group consisting of a compound optimally included in the α-cyclodextrin compound, a compound optimally included in the β-cyclodextrin compound, and a compound optimally included in the γ-cyclodextrin compound. The plurality of flavorant compounds is present at the concentration of 3 to 10% by weight in the aqueous solution of the cyclodextrin compounds.

Ethanol added to the aqueous solution of cyclodextrin compounds together with the plurality of flavorant compounds promotes inclusion of the flavorant compounds in the cyclodextrin compounds. Ethanol is present at the concentration of 1 to 5% by weight in the aqueous solution of the cyclodextrin compounds.

The aqueous solution of the cyclodextrin compounds to which the plurality of flavorant compounds and ethanol have been added is stirred. As a result, the plurality of flavorant compounds is included in the plurality of cyclodextrin compounds. In the present invention, the aqueous solution (aqueous coating solution) containing the plurality of cyclodextrin compounds including the flavorant compounds will be used for subsequent treatment as it is.

On the other hand, hygroscopic core particles are maintained in a state of planetary motion. The hygroscopic core particles are preferably formed of saccharides. Granulated sugar, milk sugar, yellow soft sugar, white soft sugar, superior white soft sugar or starch can be used as the hygroscopic core particles. In the present invention, the size of the hygroscopic core particles is approximately equal to that of final flavor-releasing granules (the thickness of the coat layer described later is on the order of nanometers). Therefore, the hygroscopic core particles preferably have a size similar to that of charcoal (activated carbon) particles used in an ordinary charcoal filter. For example, it is preferable for the hygroscopic core particles that, in the particle size distribution (mass base dry sieved particle size determined by the dry sieving test method according to JIS K 0069 [1992]), particles having a particle size of 100 µm or more occupy 99% by mass or more and particles having a particle size of 200 µm or more occupy 70% by mass or more. Usually, the maximum particle size is 1500 µm and the average particle size is 500 to 600 µm. The above-noted dry sieving test method uses a sieve of the JIS Z 8801 standard.

A centrifugal tumbling coating granulator is used to maintain the hygroscopic core particles in the planetary motion state and coat the core particles with the flavorant inclusion cyclodextrin compounds. The centrifugal tumbling coating granulator is well known in the art and is available, for example, under the name of CF granulator from Freund Corporation in Japan.

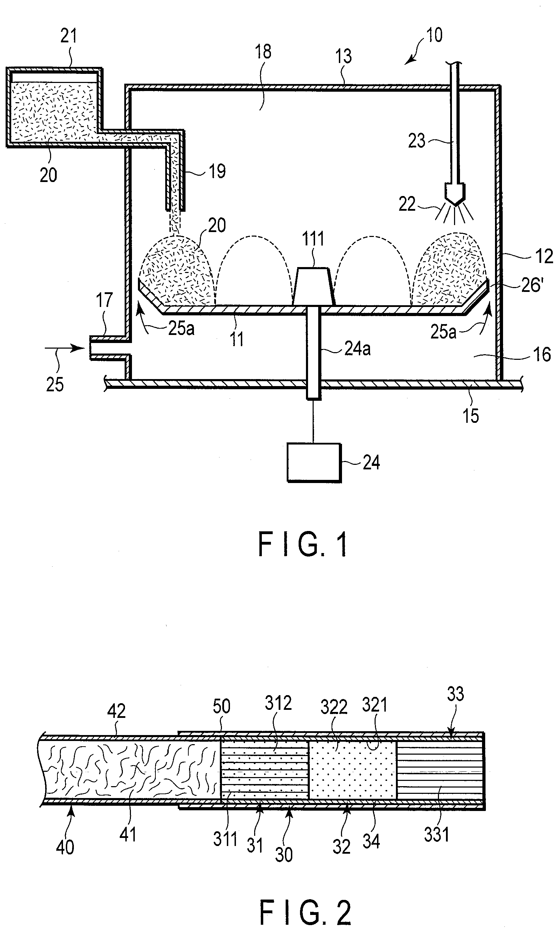

Briefly stated, a centrifugal tumbling coating granulator 10 comprises, as illustrated in FIG. 1, a rotating disk (rotor) 11 rotating horizontally and a cylindrical fixed wall (stator) 12 provided spaced apart from the rotating disk 11 and surrounding the rotating disk 11. The upper opening of the fixed wall 12 is closed by an upper wall 13. The lower opening of the fixed wall 12 is closed by a lower wall 14. A space 16 is provided between the rotating disk 11 and the lower wall 15, and an air feed pipe 17 is provided in the fixed wall 12, communicatively connected to the space 16. The rotating disk 11 and an upper portion of the fixed wall above the rotating disk 11 constitute a centrifugal tumbling chamber 18. The central portion of the rotating disk 11 is raised in a circular truncated conical shape, and the raised portion 111 can move core particles near the center of the rotating disk 11 to the peripheral portion and tumble the core particles on its inclined side face. The peripheral portion of the rotating disk 11 is slightly bent upward. The rotating disk 11 is rotated by driving of a motor 24 via a shaft 24a.

A core particle feed pipe 19 penetrates an upper portion of the fixed wall 12 and extends into the centrifugal tumbling chamber 18. Core particles 20 are supplied onto the rotating disk from a storage tank 21 of the core particles 20 installed outside the fixed wall 12, through the core particle feed pipe 19. A spray nozzle 23 for spraying an aqueous solution 21 onto the core particles 19 on the rotating disk 11 penetrates the upper wall 13 and extends into the centrifugal tumbling chamber 18.

The core particles 20 are placed on the rotating disk 11 from the core particle feed pipe 19 and the rotating disk 11 is driven to rotate by the motor 24, and at the same time, an air 25 is fed into the space 16 from the air feed pipe 17. The air 25 flows into the centrifugal tumbling chamber 18 through a gap 26 between the rotating disk 11 and the fixed wall 12 (slit air 25a). The core particles 20 make a planetary motion (circulation) on the rotating disk 11 due to centrifugal force produced by the rotation of the rotating disk 11 and the action of the slit air 25a. A coating aqueous solution 22 is intermittently sprayed from the spray nozzle 23 onto the core particles 20 in the planetary motion state. The coating temperature corresponds to the temperature of the slit air 25a. In the present invention, the core particles 20 are hygroscopic, and thus their surfaces are slightly dissolved by the water in the aqueous coating solution to promote attachment of the flavorant inclusion cyclodextrins. It is preferable to set spraying conditions including the number of revolutions of the rotating disk 11, the flow rate and temperature of the slit air 25a, the spraying amount of the coating aqueous solution 22 at one time and the spraying interval such that the core particles should not be agglomerated during coating. For example, the number of revolutions of the rotating disk 11 can be set at 100 to 1000 rpm, the flow rate of the slit air 25a set at 10 to 100 NL/min, the temperature of the slit air 25a set at 30 to 70°C, and the spraying amount of the coating aqueous solution at one time set at 0.2 to 5 parts by weight for 100 parts by weight of core particles per minute. The spraying interval can appropriately be set.

The cyclodextrins including the flavorant compounds are directly attached to (carried by) respective surfaces of the hygroscopic core particles by the coating noted above, producing flavor-releasing granules. The flavor-releasing granules constitute a (flavor releasing) coat layer covering the core particles.

After the coating, the particles are dried. It is preferable to carry out this drying while maintaining the flavor-releasing granules in the planetary motion state so that the prepared flavor-releasing granules should not be agglomerated. It is preferable to carry out the drying until the water content of the flavor-releasing granules becomes 1% by weight or less.

As is evident from the above description, the flavor-releasing granules comprise hygroscopic core particles and flavor-releasing coat layers provided on respective surfaces of the hygroscopic core particles. The flavor-releasing coat layers are directly carried on the respective surfaces of the hygroscopic particles and contain two or three cyclodextrin compounds selected from the group consisting of an α-cyclodextrin compound, a β-cyclodextrin compound and a γ-cyclodextrin compound, including mutually different flavorant compounds.

Further, the present invention provides a filter for a smoking article comprising a filter containing the flavor-releasing granules described above.

The filter for a smoking article according to the present invention includes a single segment filter and a multi-segment filter. The single segment filter can be formed from a filter material (for example, cellulose acetate fibers) containing the flavor-releasing granules. The multi-segment filter can comprise, in addition to a segment containing the flavor-releasing granules of the present invention, a segment containing a tobacco mainstream smoke component adsorbent (for example, activated carbon) and/or a plain filter segment. The segment containing the flavor-releasing granules can be formed from a filter material (for example, cellulose acetate fibers) containing the flavor-releasing granules of the present invention, from the flavor-releasing granules of the present invention filled in a gap provided between two segments containing filter materials, each of which may or may not contain an adsorbent, or from flavor-releasing granules of the present invention filled inside a hole provided penetrating through the central portion of a segment comprising a filter material that may or may not contain an adsorbent. The segment containing the tobacco mainstream smoke component adsorbent can be formed from a filter material containing an adsorbent or from an adsorbent filled inside a hole provided penetrating through the central portion of a segment containing a filter material that may or may not contain the flavor-releasing granules of the present invention.

Filters for smoking articles according to various embodiments of the present invention will be described below with reference to FIGS. 2 to 8. The same reference numerals are attached to the same elements throughout FIGS. 2 to 8, and a repeated description is omitted. In the description that follows, upstream and downstream relate to a flow direction of tobacco mainstream smoke.

FIG. 2 is an enlarged schematic sectional view illustrating a multi-segment filter 30 according to the first embodiment in a state connected to a cigarette rod 40. The multi-segment filter 30 includes a first segment 31 containing an adsorbent, a second segment 32 containing a flavor according to the present invention, and a third segment 33 from the upstream side to the downstream side. The first, second and third segments 31, 32 and 33 are arranged along the axial direction of the filter 30.

The first segment 31 may be formed from a filter material 311 (for example, cellulose acetate fibers bundled by a plasticizer such as triacetin) wrapped with a wrapper, not shown, and having an adsorbent 312 such as activated carbon added thereto and dispersed therein. The first segment 31 is end-to-end with the the columnar cigarette rod 40. The cigarette rod 40 is an ordinary cigarette rod, and is formed from a tobacco filler 41 such as tobacco shreds wrapped with a cigarette paper 42.

The second segment 32 is constituted by flavor-releasing granules 322 of the present invention filled inside a cavity 321 provided between the first segment 31 and the third segment 33. The third segment 33 is a plain filter that may be formed from a filter material (for example, cellulose acetate fibers bundled by a plasticizer such as triacetin) 331. The first, second and third segments 31, 32 and 33 are each columnar in shape, having approximately the same diameter as that of the cigarette rod, and the entire outer circumference thereof is wrapped with a common filter wrapping paper 34. The filter 30 and the cigarette rod 40 are connected by a tipping paper 50. A plurality of ventilation holes can be formed in the tipping paper 50.

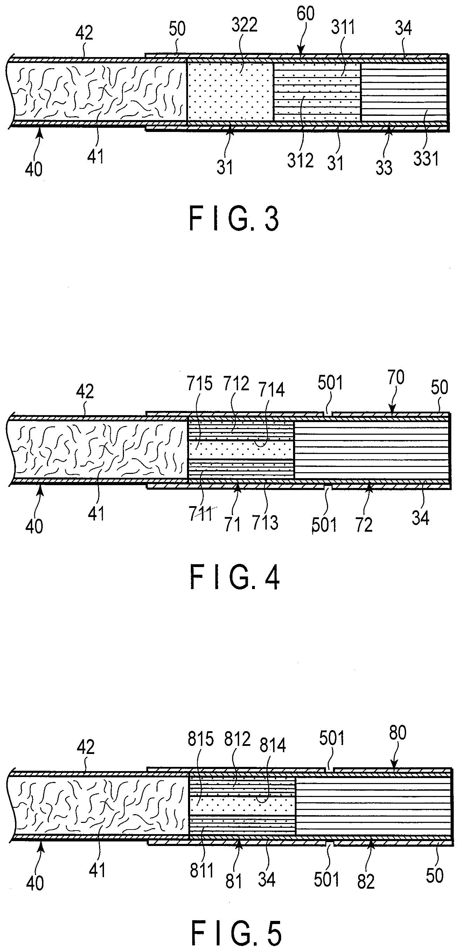

FIG. 3 is an enlarged schematic sectional view illustrating a multi-segment filter 60 according to a second embodiment in a state connected to the cigarette rod 40. The multi-segment filter 60 has the same structure as that of the multi-segment filter 30 in FIG. 2 except that the first segment 31 and the second segment 32 of the multi-segment filter 30 in FIG. 2 are interchanged.

FIG. 4 is an enlarged schematic sectional view illustrating a multi-segment filter 70 according to the third embodiment in a state connected to the cigarette rod 40. The multi-segment filter 70 includes a first segment 71 and a second segment 72 constituted by a plain filter, from the upstream side to the downstream side. The first and second segments 71 and 72 are arranged end-to-end with each other.

The first segment 71 includes a body 713 made of a filter material 711 (for example, cellulose acetate fibers bundled by a plasticizer such as triacetin) containing flavor-releasing granules 712 of the present invention dispersed therein. The body 713 is provided with a hole 714 penetrating through the central portion in the axial direction of the filter, and the hole 714 is filled with an adsorbent (for example, activated carbon) particles 715. The tipping paper 50 has many ventilation holes 501 formed in a region corresponding to the region of the plain filter 72.

FIG. 5 is an enlarged schematic sectional view illustrating a multi-segment filter 80 according to the fourth embodiment in a state connected to the cigarette rod 40. The multi-segment filter 80 includes a first segment 81 and a second segment 82 constituted by a plain filter, from the upstream side to the downstream side. The first and second segments 81 and 82 are arranged end-to-end with each other.

The first segment 81 includes a body 813 made of a filter material 811 (for example, cellulose acetate fibers bundled by a plasticizer such as triacetin) containing adsorbent (for example, activated carbon) particles 812 dispersed therein. The body 813 is provided with a hole 814 penetrating through the central portion in the axial direction of the filter, and the hole 814 is filled with flavor-releasing granules of the present invention.

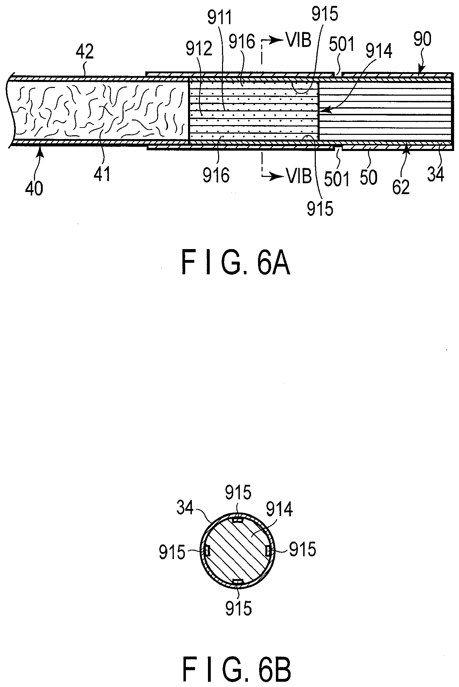

FIG. 6A is an enlarged schematic sectional view illustrating a multi-segment filter 90 according to the fifth embodiment in a state connected to the cigarette rod 40, and FIG. 6B is a sectional view along line VIB-VIB in FIG. 6A (however, the tipping paper is omitted). The multi-segment filter 90 includes a first segment 91 and a second segment 92 constituted by a plain filter, from the upstream side to the downstream side. The first and second segments 91 and 92 are arranged end-to-end with each other.

The first segment 91 includes a body 914 made of a filter material 911 (for example, cellulose acetate fibers bundled by a plasticizer such as triacetin) containing particles 912 of an adsorbent such as activated carbon dispersed therein. A plurality of grooves 915 extending in the axial direction of the filter 90 is provided in the outer circumferential surface of the body 511, and the grooves 915 are filled with flavor-releasing granules 916 of the present invention.

In the filters illustrated in FIGS. 4, 5, 6A and 6B, ventilation holes are provided in the region downstream of the first segment (region corresponding to the plain filter). As a result, the cigarette mainstream smoke does not concentrate in the central portion of the filter.

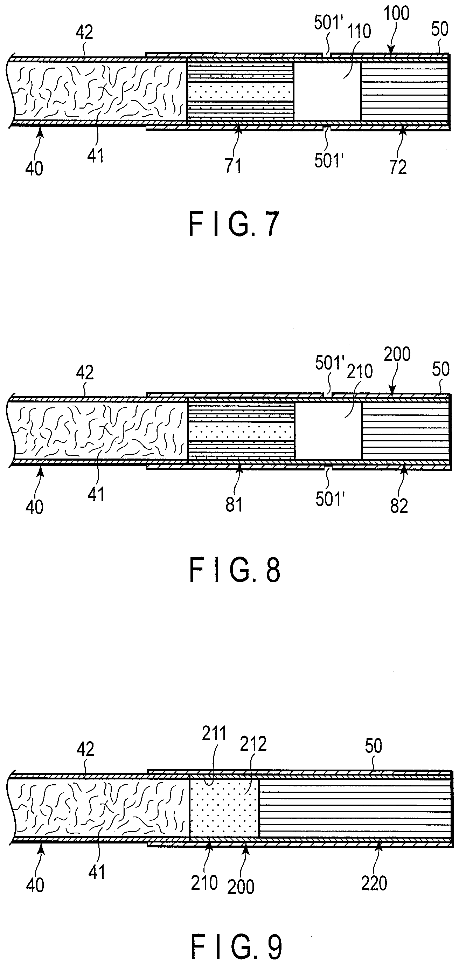

FIG. 7 is an enlarged schematic sectional view illustrating a multi-segment filter 100 according to the sixth embodiment in a state connected to the cigarette rod 40. The multi-segment filter 100 has the same structure as that of the multi-segment filter 70 illustrated in FIG. 4 except that a gap 110 is provided between the first segment 71 and the second segment 72, and ventilation holes 501' are provided in that portion of the tipping paper 50 which surrounds the gap 110.

FIG. 8 is an enlarged schematic sectional view illustrating a multi-segment filter 200 according to a seventh embodiment in a state connected to the cigarette rod 40. The multi-segment filter 200 has the same structure as that of the multi-segment filter 80 illustrated in FIG. 5 except that a gap 210 is provided between the first segment 81 and the second segment 82, and ventilation holes 501' are provided in that portion of the tipping paper 50 which surrounds the gap 210.

In the filters illustrated in FIGS. 7 and 8, the gap is provided between the first segment and the second segment. As a result, flows of tobacco mainstream smoke passing through the central portion and the circumferential portion of the first segment are mixed in the gap, forming a uniform flow, which passes through the plain filter into the mouth of a smoker.

FIG. 9 is an enlarged schematic sectional view illustrating a multi-segment filter 300 according to the eighth embodiment in a state connected to the cigarette rod 40. The multi-segment filter 300 has the cigarette rod 40 and a downstream plain filter 220. A gap 211 is provided between the cigarette rod 40 and the plain filter 220, and the gap 211 is filled with flavor-releasing granules 212 of the present invention.

Flavor-releasing granules of the present invention do not release the flavorant under usual storage conditions, but release the flavorant from the cyclodextrin compounds when water in the cigarette mainstream smoke comes into contact therewith. Therefore, when a cigarette provided with the filter of the present invention is smoked, the smoker can enjoy the flavor from the flavor-releasing granules, wixed with the flavor originated from the cigarette mainstream smoke generated by burning of the cigarette rod.

### Examples

Next, Examples of the present invention will be described, but the present invention is not limited thereto.

### Example 1

### Manufacture of flavor-releasing granules

α-CD, β-CD and γ-CD were dissolved in distilled water, each at a concentration of 5% by weight, to prepare an aqueous CD solution. To the obtained aqueous CD solution, limonene and menthol as flavorants were simultaneously added, each at a concentration of 5% by weight. Further, ethanol was added at a concentration of 5% by weight, and the solution was mixed by stirring to prepare an aqueous coating solution containing the flavorant inclusion CDs. It was visually confirmed that the flavorants were not phase-separated in the aqueous coating solution.

On the other hand, 100 g of granulated sugar (manufactured by Mitsui Sugar Co., Ltd.; average particle size: 560 µm) as core particles were placed on the rotating disk (rotor) of a centrifugal tumbling coating granulator (CF granulator, CFLABO manufactured by Freund Corporation), and a slit air at 55°C was passed at a flow rate of 20 NL/min while the rotor was rotated at 200 rpm to cause a planetary motion of the core particles. While the planetary motion of the core particles was maintained, the aqueous coating solution was intermittently sprayed onto the core particles. That is, 5 g of the aqueous coating solution was sprayed in one minute, then the spraying was stopped for 2 to 3 minutes and then 5 g of the aqueous coating solution was sprayed again in one minute. After the spraying of the aqueous coating solution was completed, the obtained granules were dried in the centrifugal tumbling coating granulator until the water content became 1% by weight or less before being taken out so that the granules should not stick to each other. The water content in the granules was measured by the method described below.

As a pilot study, the above procedure was repeated except that 5% by weight of ethanol was not added to prepare granules. However, only 0.01 mg or less of each of both flavorants (limonene and menthol) was contained in 50 mg of the obtained granules. Further, an aqueous solution of flavorants (limonene and menthol) containing an emulsifier (lecithin) at a concentration of 5% by weight without using CD was sprayed onto granulated sugar in the same manner as above to prepare granules. However, it was confirmed that no flavorants were carried in the obtained granules.

### Storage test of flavor-releasing granules

The flavor-releasing granules produced above were stored for two and four weeks each in an open state under conditioning conditions of a temperature of 22°C and a relative humidity (RH) of 60%, and accelerating condition of 55°C constant, assuming a summer environment, to measure stability with time of the flavorants in the granules and flavorant-releasing performance as described below.

### <Measurement of the amount of flavorant in flavor-releasing granules>

50 mg of flavor-releasing granules were extracted, by shaking, with 10 mL of hexane containing ethyl phenylacetate as an internal standard substance and 20 mL of water and limonene and menthol contents were analyzed by GC-MSD. Agilent 6890 (Agilent Technologies Inc.) was used as the GC, and Agilent 5975B (Agilent Technologies Inc.) was used as the MSD.

### <Measurement of the amount of water content in flavor-releasing granules>

50 mg of flavor-releasing granules were shaken with 10 mL of a methanol solution containing ethanol as an internal standard substance for one hour or more to extract water in the granules. After the shaking, the granules were allowed to stand still for 30 minutes, and it was visually confirmed that the granules settled out. Thereafter, about 1.5 mL of supernatant was dispensed. The water content of the dispensed methanol solution was analyzed by GC/TCD and quntitively determined by the internal standard method. Agilent 7890 (Agilent Technologies Inc.) was used as the GC.

### <Measurement of the amount of flavorant released into cigarette smoke>

From a commercially available cigarette fitted with a dual filter (a charcoal filter and a plain filter downstream thereof), "Mild-Seven Superlight", the dual filter body was removed, with the tipping paper left as it was. Into the cavity portion formed after the removal of the dual filter body, firstly a cellulose acetate filter (2.8Y35000, added with 6% by weight of triacetin) of 5 mm in length was inserted, then 50 mg of flavor-releasing granules were filled, and further, a cellulose acetate filter (2.8Y35000, added with 6% by weight of triacetin) of 5 mm in length was inserted at the mouth end side. Further, the ventilation holes formed in the tipping paper were clogged by an adhesive cellophane tape. Thus, sample cigarettes were obtained.

Five sample cigarettes were automatically smoked using a 10-channnel automatic smoking machine (manufactured by Chuo Sansho Co., Ltd.) provided with a Cambridge filter (manufactured by Borgwaldt KC Inc.). At this time, the smoking frequency was set at once per minute, the puff volume at 35 mL, the smoking time at 2 seconds per puff, and the number of puffs at 7. The smoke having passed through the Cambridge filter was collected with 10 mL of methanol. 1.5 mL of methanol having collected the smoke was applied to a GC-MSD to quantitatively analyze the flavorants (limonene and menthol). Agilent 6890 (Agilent Technologies Inc.) was used as the GC and Agilent 5975B (Agilent Technologies Inc.) was used as the MSD.

Flavorant-releasing efficiency (%) was calculated by multiplying by 100 a value obtained by dividing the amount of flavorant released into the smoke, thus measured, by the amount of flavorant in the granules.

Results are shown in Tables 1 and 2 below.

**Table 1: Flavorant content in the granules**

| Flavorant | Storage conditions | Storage time | Flavorant content in 50 mg of granules |
|---|---|---|---|
| Limonene | - | 0 | 0.13 mg |
| | Conditioned | 2 weeks | 0.07 mg |
| | | 4 weeks | 0.07 mg |
| | Accelerated | 2 weeks | 0.07 mg |
| | | 4 weeks | 0.07 mg |
| Menthol | - | 0 | 0.11 mg |
| | Conditioned | 2 weeks | 0.09 mg |
| | | 4 weeks | 0.09 mg |
| | Accelerated | 2 weeks | 0.10 mg |
| | | 4 weeks | 0.09 mg |

**Table 2: Flavorant-releasing efficiency of granules**

| Flavorant | Storage conditions | Storage time | Flavorant-releasing efficiency |
|---|---|---|---|
| Limonene | - | 0 | 3.2% |
| | Conditioned | 4 weeks | 1.5% |
| | Accelerated | 4 weeks | 1.6% |
| Menthol | - | 0 | 1.2% |
| | Conditioned | 4 weeks | 0.8% |
| | Accelerated | 4 weeks | 0.7% |

As shown in Table 1, some flavorants which were not included in the CDs are present immediately after the preparation of the granules, and a decrease of the CD non-included flavorants is recognized after a certain period of time. However, if the amounts of flavorants under the conditioning conditions and the accelerating conditions are compared, the difference is hardly recognized, showing that the flavorants are stably carried by the granules, taking the CD non-included flavorants out of consideration. It is considered that the difference of the flavorant carrying amounts over time from immediately after the granule production is made small by adjusting finishing drying conditions (time and temperature) for the granule production.

Also, when the releasing efficiency immediately after granule production and that after storage are compared, the releasing efficiency decreases immediately after the granule production due to the presence of flavorants not included in the CDs, as shown in Table 2, like results shown in Table 1. It is considered that the releasing efficiency is decreased because a flavorant not included in CD achieves, when compared with a flavorant included in CD, higher efficiency of release into the smoke. Next, comparison of the flavorant-releasing efficiency into smoke under conditioning conditions and accelerating conditions shows that values of both are approximately the same and though the flavorant release decreases immediately after the granule production, a stable flavorant release over a long period can be obtained. As described above, the decrease of flavorant releasing efficiency immediately after granule production is considered to be inhibited by adjusting finishing drying conditions (time and temperature) for granule production.

### Example 2

From a commercially available cigarette fitted with a dual filter, "Mild-Seven Superlight", the plain filter body and the charcoal filter body were removed, with the tipping paper left as it was. The central portion of the removed charcoal filter was bored, forming a central hole, which was filled with 50 mg of flavor-releasing granules immediately after being produced in Example 1. The granule-filled charcoal filter body was inserted into the cavity surrounded by the tipping paper, and then a cellulose acetate filter (2.8Y35000 added with 6% by weight of triacetin) (plain filter) of 5 mm in length was inserted, producing a cigarette having a filter of the structure illustrated in FIG. 5.

### Example 3

From a commercially available cigarette fitted with a dual filter, "Mild-Seven Superlight", the plain filter body and the charcoal filter body were removed, with the tipping paper left as it was. Grooves were created in the outer circumference of the removed charcoal filter and filled with 50 mg in total of flavor-releasing granules immediately after being produced in Example 1. This charcoal filter body was inserted into the cavity surrounded by the tipping paper, and then a cellulose acetate filter (2.8Y35000 added with 6% by weight of triacetin) (plain filter) of 5 mm in length was inserted, producing a cigarette having a filter of the structure illustrated in FIGS. 6A and 6B.

### Example 4

From a commercially available cigarette fitted with a dual filter, "Mild-Seven Superlight", the plain filter body was removed, with the tipping paper left as it was. The formed cavity was filled with 50 mg of flavor-releasing granules immediately after being produced in Example 1, and then a cellulose acetate filter (2.8Y35000, added with 6% by weight of triacetin) (plain filter) of 5 mm in length was inserted, producing a cigarette having a filter of the structure illustrated in FIG. 2.

### Example 5

From a commercially available cigarette fitted with a dual filter, "Mild-Seven Superlight", the plain filter body and the charcoal filter body were removed, with the tipping paper left as it was. The formed cavity was filled with 50 mg of flavor-releasing granules immediately after being produced in Example 1, then the removed charcoal filter body was inserted, and lastly a cellulose acetate filter (2.8Y35000, added with 6% by weight of triacetin) (plain filter) of 5 mm in length was inserted, producing a cigarette having a filter of the structure illustrated in FIG. 3.

### Example 6

From a commercially available cigarette fitted with a dual filter, "Mild-Seven Superlight", the plain filter body and the charcoal filter body were removed, with the tipping paper left as it was. The formed cavity was filled with 50 mg of flavor-releasing granules immediately after being produced in Example 1, and then a cellulose acetate filter (2.8Y35000, added with 6% by weight of triacetin) (plain filter) of 5 mm in length was inserted, producing a cigarette having a filter of the structure illustrated in FIG. 9.

The cigarettes produced in Examples 2 to 6 were automatically smoked and the amount of flavorants in the cigarette smoke, as in Example 1. For the automatic smoking, however, the smoking frequency was set at twice per minute, the puff volume at 55 mL, the smoking time at 2 seconds per puff, and the number of times of puffs at 7. Other conditions are the same as described above. The amount of flavorants released per tar was calculated by dividing the amount of flavorant released into the smoke measured as described above by the amount of tar in the cigarette smoke. According to the conventional method, the amount of tar is a value obtained by collecting the components of the smoke generated during the automatic smoking by means of the Cambridge filter and subtracting the amounts of water and nicotine measured by the conventional method from the weight of the collected components. Results are shown in Tables 3 below.

**Table 3: Amount of flavorant released per tar amount**

| | Flavorant | Amount of flavorant released /tar amount |
|---|---|---|
| Example 2 | Limonene | 2.6 x 10⁻⁴ |
| | Menthol | 2.1 x 10⁻⁴ |
| Example 3 | Limonene | 2.4 x 10⁻⁴ |
| | Menthol | 1.7 x 10⁻⁴ |
| Example 4 | Limonene | 2.6 x 10⁻⁴ |
| | Menthol | 2.1 x 10⁻⁴ |
| Example 5 | Limonene | 2.6 x 10⁻⁴ |
| | Menthol | 2.1 x 10⁻⁴ |
| Example 6 | Limonene | 4.7 x 10⁻⁴ |
| | Menthol | 4.3 x 10⁻⁴ |

It is clear from results shown in Table 3 that, setting aside the plain filter, when a segment containing the flavor-releasing granules is used together with a segment containing activated carbon rather than when a segment containing the flavor-releasing granules is used alone, the amount of flavorant released into the smoke decreases, but is approximately the same, regardless of the positional relationship between the segment containing the flavor-releasing granules and the segment containing activated carbon.

## Claims

1. A method of producing flavor-releasing granules, comprising:
(a) adding ethanol, together with a mixture of plurality of flavorant compounds, to an aqueous solution containing two or three cyclodextrin compounds selected from the group consisting of an α-cyclodextrin compound, a β-cyclodextrin compound and a γ-cyclodextrin compound at a total concentration of 1 to 10 % by weight, such that the mixture of plurality of flavorant compounds are present at a concentration of 3 to 10 % by weight in the aqueous solution and the ethanol is present at a concentration of 1 to 5 % by weight in the aqueous solution; and conducting stirring to include the flavorant compounds within the selected cyclodextrin compounds, thereby providing an aqueous coating solution containing the cyclodextrin mixture including the flavorant compounds;
(b) maintaining hygroscopic core particles in a state of planetary motion, by placing hygroscopic core particles on a rotating disk of a centrifugal tumbling coating granulator comprising the rotating disk rotating horizontally, a cylindrical fixed wall provided spaced apart from the rotating disk and surrounding the rotating disk, and a lower wall closing a lower opening of the fixed wall; and driving the rotating disk to rotate and the same time feeding an air into a space provided between the rotating disk and the lower wall; and
(c) intermittently spraying the aqueous coating solution onto the hygroscopic core particles in the state of planetary motion and conducting drying to form a flavor-releasing coat layer containing the cyclodextrin mixture including the flavorant compounds directly carried on respective surfaces of the hygroscopic core particles without a binder.

2. The method according to claim 1 , wherein the spraying is performed at a temperature of 30 to 70°C.

3. Flavor-releasing granules obtained by the method according to claim 1 or 2, comprising hygroscopic core particles and flavor-releasing coat layers provided on respective surfaces of the hygroscopic core particles, wherein the flavor-releasing coat layers are directly carried on the respective surfaces of the hygroscopic particles without addition of a binder and contain two or three cyclodextrin compounds selected from the group consisting of an α-cydodextrin compound, a β-cydodextrin compound and a γ-cyclodextrin compound and including mutually different flavorant compounds.

4. A filter for a smoking article, comprising a filter containing the flavor-releasing granules according to claim 3.

5. The filter according to claim 4, comprising a first filter segment, and a second filter segment provided downstream of the first filter segment, wherein one of the first filter segment and the second filter segment contains the flavor-releasing granules and the other contains activated carbon.

6. The filter according to claim 4, comprising a filter body comprising a cellulose acetate fiber bundle and provided with a cavity penetrating its central portion in an axial direction thereof, wherein the flavor-releasing granules are arranged in one of the cavity and the cellulose acetate fiber bundle and activated carbon is arranged in the other.

## Patentansprüche

1. Verfahren zur Herstellung von Geschmacksstoff freisetzenden Körnchen, umfassend:
(a) Zugeben von Ethanol, zusammen mit einer Mischung aus einer Vielzahl von Geschmackstoffverbindungen, zu einer wässrigen Lösung, enthaltend zwei oder drei Cyclodextrinverbindungen, ausgewählt aus der Gruppe, bestehend aus einer α-Cyclodextrinverbindung, einer β-Cyclodextrinverbindung und einer γ-Cyclodextrinverbindung, in einer Gesamtkonzentration von 1 bis 10 Gew.-%, so dass die Mischung aus einer Vielzahl von Geschmacksstoffverbindungen in einer Konzentration von 3 bis 10 Gew.-% in der wässrigen Lösung vorliegt und der Ethanol in einer Konzentration von 1 bis 5 Gew.-% in der wässrigen Lösung vorliegt; und Rühren, um die Geschmacksstoffverbindungen in die ausgewählten Cyclodextrinverbindungen einzuschließen, um hierdurch eine wässrige Beschichtungslösung bereitzustellen, welche eine Cyclodextrinmischung enthält, welche die Geschmacksstoffverbindungen inkludiert;
(b) Aufrechterhalten von hygroskopischen Kernteilchen in einem Zustand einer planetenähnlichen Bewegung, dadurch, dass die hygroskopischen Kernteilchen auf eine rotierende Scheibe eines Taumelgranulators zur zentrifugalen Beschichtung aufgebracht werden, umfassend die horizontale Rotation der rotierenden Scheibe, eine fixierte zylindrische Wandung, die von der rotierenden Scheibe entfernt angebracht ist und die rotierende Scheibe umgibt, und eine darunterliegende Wandung, welche eine darunterliegende Öffnung der fixierten Wandung abschließt; und Bewegen der rotierenden Scheibe, um sie zu rotieren und gleichzeitig in den Spalt zwischen der rotierenden Scheibe und der darunterliegenden Wandung Luft zuzuführen; und
(c) periodisches Sprühen der wässrigen Beschichtungslösung auf die hygroskopischen Kernteilchen während der planetenähnlichen Bewegung und Durchführen einer Trocknung, um eine Geschmacksstoff freisetzende Beschichtungsschicht zu bilden, welche die Cyclodextrinmischung einschließlich der Geschmacksstoffverbindungen enthält, welche direkt auf den entsprechenden Oberflächen der hygroskopischen Kernteilchen ohne ein Bindemittel aufliegen.

2. Verfahren nach Anspruch 1, wobei das Sprühen bei einer Temperatur von 30 bis 70°C durchgeführt wird.

3. Geschmackstoff freisetzende Körnchen, erhalten durch das Verfahren nach Anspruch 1 oder 2, umfassend hygroskopische Kernteilchen und Geschmackstoff freisetzende beschichtete Schichten, die auf den jeweiligen Oberflächen der hygroskopischen Kernteilchen aufgebracht sind, wobei die Geschmackstoff freisetzenden beschichteten Schichten auf den jeweiligen Oberflächen der hygroskopischen Teilchen ohne Zugabe eines Bindemittels direkt aufgebracht sind und zwei oder drei Cyclodextrinverbindungen enthalten, ausgewählt aus der Gruppe, bestehend aus einer α-Cyclodextrinverbindung, einer β-Cyclodextrinverbindung und einer γ-Cyclodextrinverbindung und sie wechselseitig unterschiedliche Geschmackstoffverbindungen enthalten.

4. Filter für einen Rauchartikel, umfassend einen Filter, enthaltend die Geschmackstoff freisetzenden Körnchen nach Anspruch 3.

5. Filter nach Anspruch 4, umfassend ein erstes Filtersegment und ein zweites Filtersegment, das dem ersten Filtersegment nachgeordnet ist, wobei eines von dem ersten Filtersegment und dem zweiten Filtersegment die Geschmackstoff freisetzenden Körnchen und das andere aktivierten Kohlenstoff enthält.

6. Filter nach Anspruch 4, umfassend einen Filterkörper, umfassend eine Zelluloseacetatfaserbündel und ausgestattet mit einem Hohlraum, welcher aus einen zentralen Abschnitt in einer axialen Richtung hiervon durchdringt, wobei die Geschmackstoff freisetzenden Körnchen in einem von dem Hohlraum und dem Zelluloseacetatfaserbündel angeordnet sind und der aktivierte Kohlenstoff im anderen angeordnet ist.

## Revendications

1. Procédé de production de granulés libérant un arôme comprenant :
(a) l'addition d'éthanol, ensemble avec un mélange de plusieurs composés aromatisants, à une solution aqueuse contenant deux ou trois composés de cyclodextrines choisis dans le groupe constitué d'un composé d'α-cyclodextrine, d'un composé de β-cyclodextrine et d'un composé de y-cyclodextrine à une concentration totale de 1 à 10 % en masse, de telle sorte que le mélange de plusieurs composés aromatisants est présent à une concentration de 3 à 10 % en masse dans la solution aqueuse et l'éthanol est présent à une concentration de 1 à 5 % en masse dans la solution aqueuse ; et la réalisation d'une agitation pour inclure les composés aromatisants dans les composés de cyclodextrines choisis, fournissant par là une solution de revêtement aqueuse contenant le mélange de cyclodextrines incluant les composés aromatisants ;
(b) le maintien de particules de noyaux hygroscopiques dans un état de déplacement planétaire, en plaçant des particules de noyaux hygroscopiques sur un disque rotatif d'un granulateur de revêtement à tambour centrifuge comprenant le disque rotatif tournant horizontalement, une paroi fixe cylindrique fournie à distance du disque rotatif et entourant le disque rotatif, et une paroi inférieure fermant une ouverture inférieure de la paroi fixe ; et la commande du disque rotatif pour la rotation et l'introduction simultanée d'un air dans un espace fourni entre le disque rotatif et la paroi inférieure ; et
(c) la pulvérisation intermittente de la solution de revêtement aqueuse sur les particules de noyaux hygroscopiques dans l'état de déplacement planétaire et la réalisation de séchage pour former une couche de revêtement libérant un arôme contenant le mélange de cyclodextrines incluant les composés aromatisants directement supportés sur des surfaces respectives des particules de noyaux hygroscopiques sans un liant.

2. Procédé selon la revendication 1, dans lequel la pulvérisation est réalisée à une température de 30 à 70°C.

3. Granulés libérant un arôme obtenu par le procédé selon la revendication 1 ou 2, comprenant des particules de noyaux hygroscopiques et des couches de revêtement libérant un arôme fournies sur des surfaces respectives des particules de noyaux hygroscopiques, dans lesquels les couches de revêtement libérant un arôme sont directement supportées sur les surfaces respectives des particules hygroscopiques sans addition d'un liant et contiennent deux ou trois composés de cyclodextrines choisis dans le groupe constitué d'un composé d'α-cyclodextrine, d'un composé de β-cyclodextrine et d'un composé de γ-cyclodextrine et incluant des composés aromatisants mutuellement différents.

4. Filtre pour un article à fumer, comprenant un filtre contenant les granulés libérant un arôme selon la revendication 3.

5. Filtre selon la revendication 4, comprenant un premier segment de filtre, et un second segment de filtre fourni en aval du premier segment de filtre, dans lequel un du premier segment de filtre et du second segment de filtre contient les granulés libérant un arôme et l'autre contient du charbon actif.

6. Filtre selon la revendication 4, comprenant un corps de filtre comprenant un faisceau de fibres d'acétate de cellulose et muni d'une cavité pénétrant dans sa portion centrale dans une direction axiale de celui-ci, dans lequel les granulés libérant un arôme sont disposés dans un de la cavité et du faisceau de fibres d'acétate de cellulose et du charbon actif est disposé dans l'autre.
